# EUROPEAN PATENT APPLICATION

(11) **EP 1 964 627 A2**
(43) Date of publication of application: **03.09.2008**
(21) Application number: 08154270.6
(22) Date of filing: 14.04.2005
(51) Int. Cl.: B22D 17/00, B22D 17/20

(54) **Transfer of force from manifold to plate of hot runner of Injection molding system usable for molding metal alloy**

(30) Priority: 17.05.2004 US 846516
(62) Divisional of application: 05734015.0
(71) Applicant: Husky Injection Molding Systems S.A., 3401 Dudelange (LU)
(72) Inventor: Manda, Jan M., Toronto Ontario M2N 2X8 (CA); Glasford, Zac, Toronto Ontario M9A 1A4 (CA); Kestle, Martin R., Everett Ontario L0M 1J0 (CA)

(57) **Abstract**

Disclosed is an injection molding system (10) usable for molding of a metal alloy above a solidus temperature of the metal alloy. The injection molding system (10) includes: a machine nozzle (44); and a hot runner (26), including: a supply manifold (170) being configured to receive the metal alloy from the machine nozzle (44), the supply manifold (170) having a first elbow-shaped portion; a drop manifold (172) having a second elbow-shaped portion being coupled with the first elbow-shaped portion of the supply manifold (170); a melt conduit coupler (80, 180) connecting the supply manifold (170) with the drop manifold (172), the melt conduit coupler (80, 180) including: a cooling structure (82) being configured for cooling said melt conduit coupler (80, 180) so that a seal of at least partially solidified weepage of molding material forms at an interface between the supply manifold (170) and the drop manifold (172); a backing plate (62) including an opening, the machine nozzle (44) extending through the opening; and a manifold plate (64) abutting against the backing plate (62), the manifold plate (64) and the backing plate (62) supportively housing the supply manifold (170) and the drop manifold (172), the manifold plate (64) including a drop passage, and a discharge portion of the drop manifold (172) extending through the drop passage, the manifold plate (64) abutting the supply manifold (170) and the drop manifold (172), wherein the drop manifold (172) is configured to transfer a load to the manifold plate (64) along a first direction extending inclined relative to a melt passageway of the drop manifold (172).

## Description

### Cross-reference to Related Application

This patent application is a divisional patent application of prior United States Patent Application No. 10/846,516, filed May 17, 2004 (Applicant reference number H-741-0-US). This divisional patent application also claims the benefit and priority of United States Patent Application No. 10/846,516, filed May 17, 2004.

### Background Of The Invention

### 1. Field of the Invention

The present invention relates to molding systems; and more specifically, the present invention relates to, but not limited to: (i) injection molding systems usable for molding of a metal alloy above a solidus temperature of the metal alloy, injection molding system having a hot runner, and/or (ii) hot runners of injection molding systems usable for molding of a metal alloy above a solidus temperature of the metal alloy.

### 2. Related Art

The present invention is concerned with the molding of a metal alloy (such as Magnesium) in a semi-solid or fully liquid (i.e. above solidus) state. Detailed descriptions of exemplary apparatus and operations of injection molding systems used for such alloys are available with reference to U.S. Patent Nos. 5,040,589 and 6,494,703.

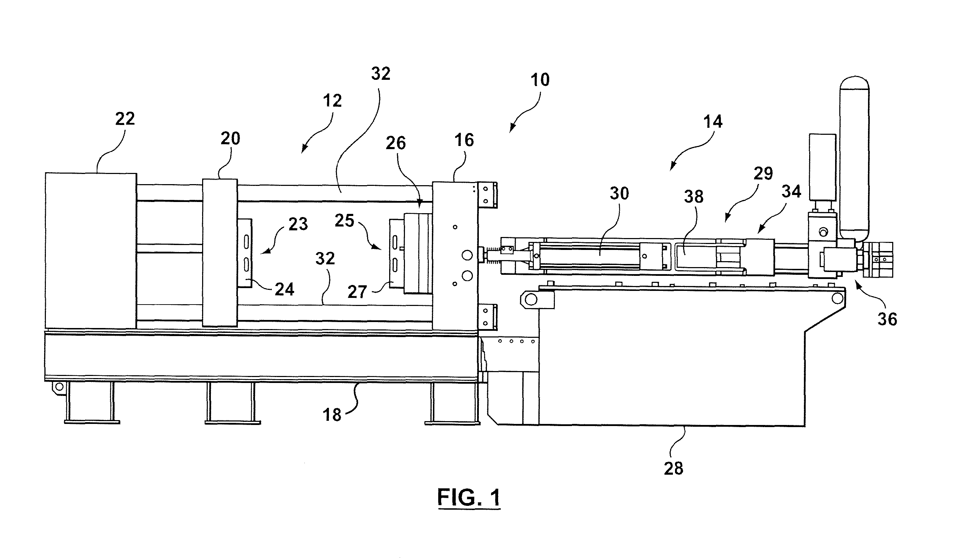

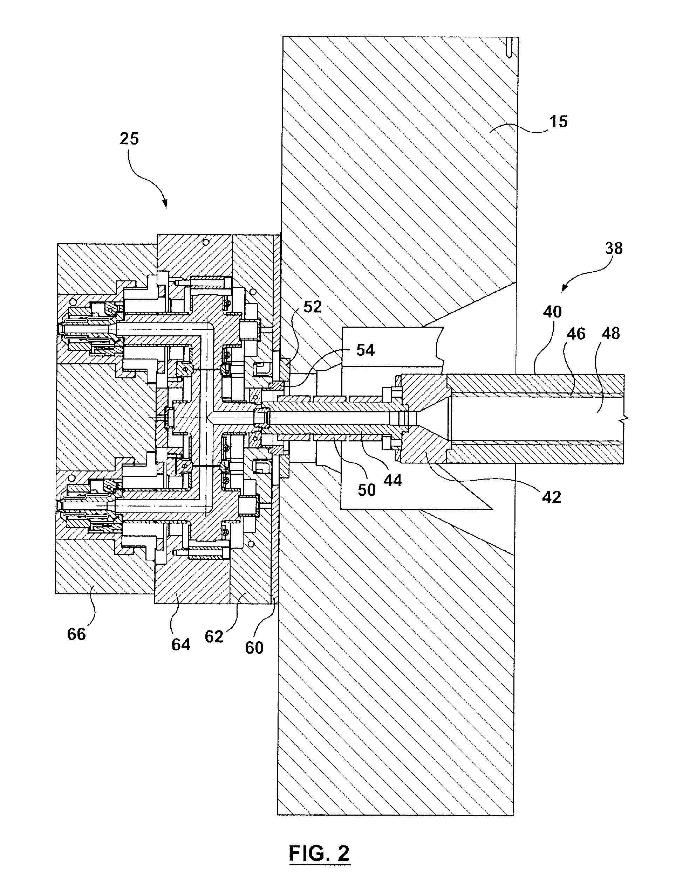

FIGS. 1 and 2 show a known injection molding system 10 including an injection unit 14 and a clamp unit 12 that are coupled together. The injection unit 14 processes a solid metal feedstock (not shown) into a melt and subsequently injects the melt into a closed and clamped injection mold arranged in fluid communication therewith. The injection mold is shown in an open configuration in FIG. 1 and comprises complementary mold hot and cold halves 23 and 25. The injection unit 14 further includes an injection unit base 28 which slidably supports an injection assembly 29 mounted thereon. The injection assembly 29 comprises a barrel assembly 38 arranged within a carriage assembly 34, and a drive assembly 36 mounted to the carriage assembly 34. The drive assembly 36 is mounted directly behind the barrel assembly 38, for the operation (i.e., rotation and reciprocation) of a screw 56 (FIG. 2) arranged within the barrel assembly 38. The injection assembly 29 is shown to be connected to a stationary platen 16 of the clamp unit 12, through the use of carriage cylinders 30. The carriage cylinders 30 are configured to apply, in operation, a carriage force along the barrel assembly 38 for maintaining engagement between a machine nozzle 44 (FIG. 2), of the barrel assembly 38, within a melt conduit (e.g., sprue bushing, manifold 170, etc.), of a hot half runner system 26, whilst the melt is being injected into the mold (i.e., acts against the reaction forces generated by the injection of the melt). The connection between the machine nozzle 44 and the melt conduit of the runner system is preferably a spigot connection, as described in United States patent 6,357,511.

The barrel assembly 38, in FIG. 2, is shown to include an elongated cylindrical barrel 40 with an axial cylindrical bore 48A arranged therethrough. The bore 48A is configured to cooperate with the screw 56 arranged therein, for processing and transporting the metal feedstock, and for accumulating and subsequently channeling a melt of molding material during injection thereof. The screw 56 includes a helical flight 58 arranged about an elongate cylindrical body portion 59 thereof. A rear portion (not shown) of the screw 56 is preferably configured to couple with the drive assembly 36. A forward portion of the screw (also shown) is configured to receive a non-return valve 60 with an operative portion thereof arranged in front of a forward mating face of the screw 56. The barrel assembly 38 also includes a barrel head 42 that is positioned intermediate the machine nozzle 44 and a front end of the barrel 40. The barrel head 42 includes a melt passageway 48B arranged therethrough that connects the barrel bore 48A with a complementary melt passageway 48C arranged through the machine nozzle 44. The melt passageway 48B through the barrel head 42 includes an inwardly tapering portion to transition the diameter of the melt passageway to the much narrower melt passageway 48C of the machine nozzle 44. The central bore 48A of the barrel 40 is also shown as including a liner 46 made from a corrosion resistant material, such as Stellite^{™}, to protect the barrel substrate material, commonly made from a nickel-based alloy such as Inconel^{™}, from the corrosive properties of the high temperature metal melt. Other portions of the barrel assembly 38 that come into contact with the molding material melt may also include similar protective linings or coatings.

The barrel 40 is further configured for connection with a source of comminuted metal feedstock through a feed throat (not shown) that is located through a top-rear portion of the barrel (also not shown). The feed throat directs the feedstock into the bore 48A of the barrel 40. The feedstock is then subsequently processed into a melt of molding material by the mechanical working thereof, by the action of the screw 56 in cooperation with the barrel bore 48A, and by controlled heating thereof. The heat is provided by a series of heaters 50 (not all of which are shown) that are arranged along a substantial portion of the length of the barrel assembly 38.

The clamp unit 12 includes a clamp base 18 with a stationary platen 16 securely retained to an end thereof, a clamp block 22 slidably connected at an opposite end of the clamp base 18, and a moving platen 20 arranged to translate therebetween on a set of tie bars 32 that otherwise interconnect the stationary platen 16 and the clamp block 22. As is known, the clamp unit 12 further includes a means for stroking (not shown) the moving platen 20 with respect to the stationary platen to open and close the injection mold halves 23, 25 arranged therebetween. A clamping means (not shown) is also provided between the clamp block and the moving platen to provide of a clamping force between the mold halves 23, 25 during the injection of the melt of molding material. The hot half of the injection mold 25 is mounted to a face of the stationary platen 16, whereas the complementary cold half of the mold 23 is mounted to an opposing face of the moving platen 20.

In further detail, the injection mold includes at least one molding cavity (not shown) formed between complementary molding inserts shared between the mold halves 23, 25. The mold cold half 23 includes a core plate assembly 24 with at least one core molding insert, not shown, arranged therein. The mold hot half 25 includes a cavity plate assembly 27, with at least one complementary cavity molding insert arranged therein, mounted to a face of a runner system 26. The hot runner system 26 provides a means for connecting the melt passageway 48C of the machine nozzle 44 with at least one molding cavity for the filling thereof. The runner system 26 includes a manifold plate 64 and a complementary backing plate 62 for enclosing melt conduits therebetween, and a thermal insulating plate 60. The runner system 26 may be an offset or multi-drop hot runner system, a cold runner system, a cold sprue system, or any other commonly known melt distribution means.

The process of molding a metal in the above-described system generally includes the steps of: (i) establishing an inflow of metal feedstock into the rear end portion of the barrel 40; (ii) working (i.e., shearing) and heating the metal feedstock into a thixotropic melt of molding material by: (iia) the operation (i.e., rotation and retraction) of the screw 56 that functions to transport the feedstock/melt, through the cooperation of the screw flights 58 with the axial bore 48A, along the length of the barrel 40, past the non-return valve 60, and into an accumulation region defined in front of the non-return valve 60; and (iib) heating the feedstock material as it travels along a substantial portion of the barrel assembly 38; (iii) closing and clamping the injection mold halves 23, 25; (iv) injecting the accumulated melt through the machine nozzle 44 and into the injection mold by a forward translation of the screw 56; (v) optionally filling any remaining voids in the molding cavity by the application of sustained injection pressure (i.e. densification); (vi) opening the injection mold, once the molded part has solidified through the cooling of the injection mold; (vii) removal of the molded part from the injection mold; (viii) optionally conditioning the injection mold for a subsequent molding cycle (e.g., application of mold release agent).

A major technical challenge that has plagued the development of a hot runner system 26, suitable for use in metal injection molding, has been the provision of a substantially leak-free means for interconnecting the melt conduits therein. Experience has taught that the traditional connection regime used in a plastics hot runner system (i.e., a face-seal that is compressively loaded under the thermal expansion of the melt conduits) is not suitable in a hot runner system for metal molding. In particular, in a metal hot runner system, the extent to which the melt conduits must be compressed to maintain a face-seal therebetween is also generally sufficient to crush them (i.e., yielding occurs). This is partly the result of the high operational temperatures of the melt conduits (e.g., around 600° C for a typical Mg alloy), which significantly reduces the mechanical properties of the component material (e.g., typically made from a hot work tool steel such as DIN 1.2888). Another problem is that significant thermal gradients exist across the melt conduits at the high operating temperature cause significant unpredictability in their geometry which complicates the selection of suitable cold clearances.

Another challenge with the configuration of structure for interconnecting melt conduits has been in accommodating the thermal growth of the interconnected melt conduits (i.e., as the conduits are heated between ambient and operating temperatures) without otherwise displacing functional portions thereof that may need to remain fixed relative to other structure. For example, in a single drop hot runner system, with an offset drop, wherein there are two melt conduits, namely a supply and a drop manifold, respectively, it is advantageous to fix the location of a machine nozzle receptacle portion of the supply manifold for sake of alignment with the machine nozzle 44, while also fixing a drop (i.e., discharge) portion of the drop manifold for sake of alignment with an inlet gate of a molding cavity insert. Accordingly, some means for sealing between the supply and drop manifolds must be provided that accommodates an expansion gap therebetween in the cold condition, and that does not rely on a face-seal therebetween in the hot condition. This becomes even more of a challenge in a multi-drop hot runner (i.e., a hot runner with more than one discharge nozzle for servicing a large molding cavity or a mold with more than one molding cavity) wherein there are many fixed drop portions, the drop portions being configured on a corresponding quantity of drop manifolds.

### Summary Of The Invention

The present invention provides an injection molding machine apparatus and /or a hot runner.

According to a first aspect of the present invention, there is provided an injection molding system (10) usable for molding of a metal alloy above a solidus temperature of the metal alloy, the injection molding system (10) including: a machine nozzle (44); and a hot runner (26), including: a supply manifold (170) being configured to receive the metal alloy from the machine nozzle (44), the supply manifold (170) having a first elbow-shaped portion; a drop manifold (172) having a second elbow-shaped portion being coupled with the first elbow-shaped portion of the supply manifold (170); a melt conduit coupler (80, 180) connecting the supply manifold (170) with the drop manifold (172), the melt conduit coupler (80, 180) including: a cooling structure (82) being configured for cooling said melt conduit coupler (80, 180) so that a seal of at least partially solidified weepage of molding material forms at an interface between the supply manifold (170) and the drop manifold (172); a backing plate (62) including an opening, the machine nozzle (44) extending through the opening; and a manifold plate (64) abutting against the backing plate (62), the manifold plate (64) and the backing plate (62) supportively housing the supply manifold (170) and the drop manifold (172), the manifold plate (64) including a drop passage, and a discharge portion of the drop manifold (172) extending through the drop passage, the manifold plate (64) abutting the supply manifold (170) and the drop manifold (172), wherein the drop manifold (172) is configured to transfer a load to the manifold plate (64) along a first direction extending inclined relative to a melt passageway of the drop manifold (172).

According to a second aspect of the present invention, there is provided a hot runner (26) of an injection molding system (10) having a machine nozzle (44), the injection molding system (10) being usable for molding of a metal alloy above a solidus temperature of the metal alloy, the hot runner (26) including: a supply manifold (170) being configured to receive the metal alloy from the machine nozzle (44), the supply manifold (170) having a first elbow-shaped portion; a drop manifold (172) having a second elbow-shaped portion being coupled with the first elbow-shaped portion of the supply manifold (170); a melt conduit coupler (80, 180) connecting the supply manifold (170) with the drop manifold (172), the melt conduit coupler (80, 180) including: a cooling structure (82) being configured for cooling said melt conduit coupler (80, 180) so that a seal of at least partially solidified weepage of molding material forms at an interface between the supply manifold (170) and the drop manifold (172); a backing plate (62) including an opening, the machine nozzle (44) extending through the opening; and a manifold plate (64) abutting against the backing plate (62), the manifold plate (64) and the backing plate (62) supportively housing the supply manifold (170) and the drop manifold (172), the manifold plate (64) including a drop passage, and a discharge portion of the drop manifold (172) extending through the drop passage, the manifold plate (64) abutting the supply manifold (170) and the drop manifold (172), wherein the drop manifold (172) is configured to transfer a load to the manifold plate (64) along a first direction extending inclined relative to a melt passageway of the drop manifold (172).

### detailed Description Of The Drawings

Exemplary embodiments of the presently preferred features of the present invention will now be described with reference to the accompanying drawings in which:
FIG. 1 is a schematic representation of a known injection molding machine;
FIG. 2 is a partial section of a portion of the FIG. 1 injection molding machine;
FIGS. 3A and 3B, comprise schematic plan and cross-section views of a first embodiment according to the present invention;
FIGS. 4A and 4B comprise perspective and cross-section views of an alternative embodiment according to the present invention;
FIG. 5 is a cross-section of another alternative embodiment according to the present invention;
FIG. 6 is a perspective view of an embodiment according to the present invention used in an injection mold hot half;
FIG. 7 is a cross-section of the FIG. 6 embodiment;
FIGS. 8A and 8B comprise perspective and cross-section views of the supply manifold shown in FIGS. 6 and 7;
FIGS. 9A and 9B comprise perspective and cross-section views of the drop manifold shown in FIGS. 6 and 7;
FIG. 10 is a perspective view of another embodiment according to the present invention used in an injection mold hot half;
FIG. 11 is a is a cross-section of the FIG. 10 embodiment;
FIGS. 12A and 12B comprise perspective and cross-section views of the supply manifold shown in FIGS. 10 and 11.

### Detailed description of the

### Presently preferred exemplary embodiments

### 1. Introduction

The present invention will now be described with respect to several embodiments in which an injection molding system is used for the molding of a metal alloy, such as Magnesium, above its solidus temperature (i.e., semi-solid thixotropic, or liquidus state). However, the present invention may find use in other injection molding applications such as plastic, liquid metal, composites, powder injection molding, etc.

Briefly, in accordance with the present invention, a melt conduit coupler is provided for interconnecting discrete melt conduits. Preferably, complementary male and female 'spigot' coupling portions are arranged on each of a melt conduit coupler and along portions of the melt conduits to be interconnected, respectively. A 'spigot', as used in this description, is a modifier that characterizes the relative configuration of pairs of complementary coupling portions that cooperate to interconnect discrete melt conduits in a substantially leak-free manner. In particular, a complementary pair of 'spigot' coupling portions are characterized in that the coupling portions are configured to cooperate in an overlapping, closely-spaced, and mutually parallel relation. The spigot coupling portions are preferably configured to cooperate to provide a 'spigot connection' between each of the melt conduit spigot coupling portions and the complementary spigot coupling portion provided on the melt conduit coupler. The `spigot connection' is characterized in that the interface between the complementary spigot coupling portions is cooled. Accordingly, a spigot connection is provided as a cooled engagement between closely-fit complementary cylindrical sealing faces, wherein a weepage or leakage of melt therebetween solidifies to provide a further effective seal that substantially prevents further leakage of melt.

The invention provides a new use for a spigot connection that solves some rather vexing problems in metal molding runner systems, outlined hereinbefore. U.S. Patent No. 6,357,511, discloses a spigot connection configured between a machine nozzle and a mold sprue bushing. According to the present invention, a melt conduit coupler has been devised that uses the spigot connection to interconnect pairs of melt conduits. The presently preferred form of the invention is as an interconnection between a pair of melt conduits.

Furthermore, a runner system may also make use of the inventive melt conduit coupler to join typical melt distribution manifolds contained therein. For example, a single drop hot runner, in an offset configuration, is disclosed herein that is particularly useful in adapting cold chamber die casting molds for use in a metal injection molding machine. Also disclosed is a multi-drop hot runner for use in a metal injection molding machine.

In a preferred embodiment of the invention, each of the melt conduits includes a spigot coupling portion that is provided on an outer circumferential surface that is arranged along a cylindrical end portion thereof. Similarly, the melt conduit coupler preferably comprises a cooled ring body wherein a complementary spigot coupling portion is arranged along an inner circumferential surface thereon. The ring body is preferably configured for the cooling thereof, in use, to maintain the required temperature at the spigot connection (i.e., provide a seal of relatively cooled, solidified melt). As one example, the temperature of the melt conduit coupler is controlled, in use, to maintain the temperature at the spigot connection at about 350°C, when molding with a typical Magnesium alloy melt.

In the following description, the mold operating temperature is typically around 200-230°C; the melt temperature is typically around 600°C; hot work tool steel (DIN 1.2888) is preferably used for manifolds, spigot tip inserts, etc. Also, the sealing/cooling rings are preferably made from regular tool steel (AISI 4140, or P20) because they are kept at a relatively low temperature and are generally isolated from large forces. Alternatively, the sealing/cooling rings can be made from AISI H13 where some force transmission is expected. The manifold insulators are preferably made from a relatively low thermally conductive material that is also capable of withstanding the extremely high processing temperatures without annealing. Presently, the preferred insulators are made from Inconel^{™}. However, the actual mold operating temperature, melt temperature, tool steel, sealing/cooling ring material, and manifold insulators may be selected based on the material being molded, the required cycle times, the available materials, etc. All such alternate configurations are to be included within the scope of the attached claims.

### 2. Spigot Seal Parameters

In accordance with the preferred embodiment, a melt conduit coupler is provided for interconnecting discrete melt conduits. Accordingly, spigot coupling portions are arranged on each of the melt conduit couplers and along portions of the melt conduits that are to be interconnected. Preferably, the fit between the complementary spigot coupling portions includes a small diametrical gap. The small gap provides for ease of engagement between the complementary coupling portions during assembly. Preferably, the gap is designed so that it is taken-up by the relative expansion of the spigot coupling portions when the melt conduits and the melt coupler are at their operating temperatures. Any diametrical interference between the spigot coupling portions at their operating temperatures may provide supplemental sealing, but is not otherwise relied upon.

In the presently preferred embodiments, a typical gap between the coupling portions is about 0.1 mm per side when the melt conduits and the melt conduit coupler are at ambient temperature. However, this 0.1 mm gap is not essential, the fit between the complementary spigot coupling portions could otherwise be exact or include a slight interference at ambient temperature. Preferably, each melt conduit coupler is independently temperature-controlled.

As will be described in detail hereinafter, active cooling of the melt conduit coupler is preferred to control the temperature at the interface between the spigot coupling portions to maintain a substantially leak-free spigot connection. However, by configuring the melt conduit within cooled runner system plates (manifold and manifold backing plates which are maintained at about 200-230°C) it may also be possible to rely solely on passive heat transfer therewith. Preferably, the melt conduit components to be interconnected are arranged in the melt conduit coupler such there is a longitudinal cold clearance therebetween when the melt conduit components are at ambient temperature. In particular, there is a cold clearance gap between complementary annular mating faces that are disposed at the ends of each of the complementary melt conduits when the melt conduits are at ambient temperature.

Preferably, the clearance between the mating faces is taken up when the melt conduits are at their operating temperatures, due to the thermal expansion thereof. Accordingly, the preload between the mating faces of the melt conduit components, if any, can be controlled to avoid excessive compressive forces that could otherwise crush the melt conduit components. In the preferred embodiments, a typical cold clearance for a melt conduit that is heated to 600°C is about 1 mm. Any face-seal that is provided between the complementary mating faces, at operating temperature, is supplemental.

### 3. The First Embodiment

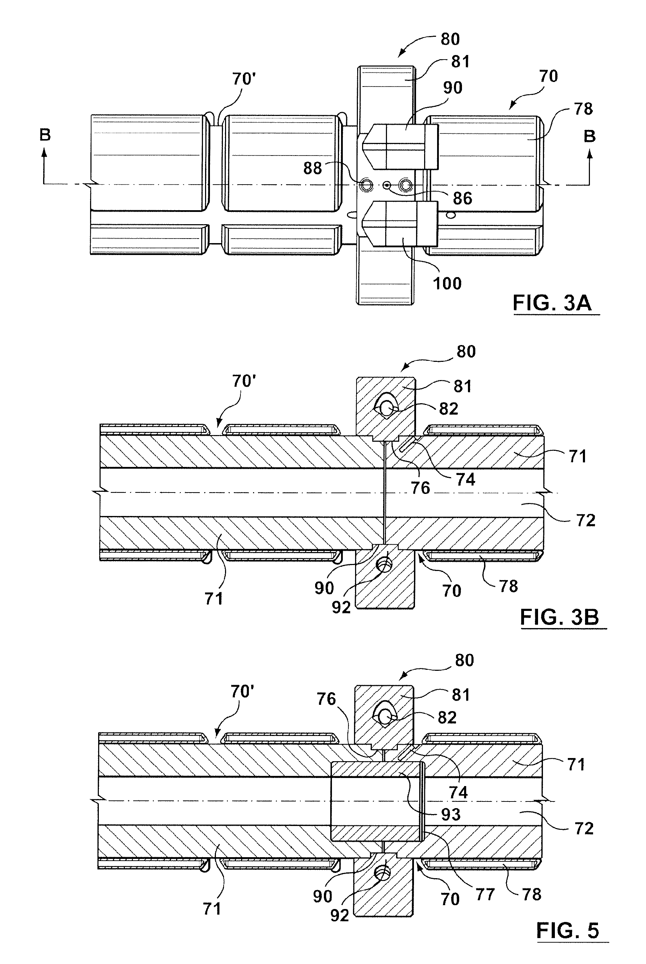

With reference to FIGS. 3A and 3B, the first embodiment of the present invention is shown. A first melt conduit 70 and a second melt conduit 70' (respectively containing melt channels 148A and 148B) are interconnected by a melt conduit coupler 80. The melt conduit coupler 80 is, in a simple form, an annular body 81 having a coolant passage or passages 82 therein, which can be seen in FIG. 3B. Two coolant fittings 100 are provided for the inlet and outlet of the coolant passage(s). The coolant passage(s) 82 are preferably connected to a source of coolant, typically air, that maintains the temperature of the melt conduit coupler 80 somewhere around 350° C. However, other coolants such as oil, water, gasses, etc. may be used, depending upon the molding application. Note that 350° C is relatively cool when compared to the melt conduits, which typically are maintained somewhere around 600° C, for Magnesium alloy molding.

The melt conduit coupler 80 is also shown to include a thermocouple installation 86 that includes a bore that is configured for receiving a thermocouple. Adjacent to the thermocouple installation is a thermocouple retainer 88 that includes a bore that is configured to receive a fastener, the fastener retains, in use, a clamp (not shown) that retains the thermocouple within the thermocouple installation 86. Preferably, the thermocouple installation 86 is located very close to a spigot coupling portion 76' disposed around an inner circumferential surface of the melt conduit coupler 80 so that the temperature at a spigot connection with complementary spigot coupling portions 76, disposed around end portions of the melt conduits 70, 70', can be controlled. Each of the melt conduits 70, 70' may have a heater 50 to maintain the temperature in the melt in conduits at the prescribed operating temperature, which again is about 600° C for Magnesium alloy molding.

FIG. 3B shows a schematic cross-section of the melt conduit coupler 80. The preferred embodiment uses a spigot connection between the melt conduit coupler 80 and the end portions of the melt conduits 70, 70'. Preferably, an inner circumferential surface of the annular body 81 and an outside circumferential surface of end portions of the melt conduits 70, 70', that are to be interconnected, are given a complementary configuration wherein the location of the melt conduit coupler 80 substantially fixed about the interface between the melt conduits 70, 70'. Accordingly, complementary shoulder portions are configured around the outside circumferential surface at the end portions of the melt conduits 70, 70' and around an inner circumferential surface of the melt conduit coupler 80, respectively. The melt conduit coupler 80 is configured to include a pair of the shoulder portions, one for each of the melt conduits 70, 70' that are to be interconnected, and are configured at opposing ends of the inner circumferential surface of the melt conduit coupler 80, the shoulder portions being separated by a residual annular portion 92. The complementary spigot coupling portions 76, 76' are configured across an outside circumferential surface of a recessed portion of the shoulder, and across the inner circumferential surface of the annular portion 92, on the melt conduit couplers 70, 70' and the melt conduit coupler 80, respectively. Of course, the coupling may eliminate the complementary shoulder portions, or may incorporate any number and/or shape of protruding and recessed surfaces to enhance coupling, depending upon the molding application.

As described hereinbefore, the spigot coupling portions 76, 76' are preferably configured to have a small gap therebetween. In use, a Magnesium alloy at 600° C has a viscosity like water and is therefore generally able to seep between complementary mating faces 120, 120' of the melt conduits 70, 70', and to thereafter seep between spigot coupling portions 76, 76'. However, because the melt conduit coupler 80 is kept at a relatively low temperature by active or passive cooling (i.e., around 350° C), the melt will fully or at least partially solidify in such gaps and provide a seal that substantially prevents the further leakage of melt.

A thermocouple 74 may be disposed at the end portions of either or both of the melt conduits 70, 70', to detect the temperature of the melt conduit adjacent the melt conduit coupler 80. Preferably, the thermocouple 74 is located very close to the interface between the spigot coupling portions 76, 76', so that the temperature of the melt within the melt passageway 148A, 148B adjacent the spigot connection can be controlled (for example, by controlling the power to the heaters 50 disposed about the melt conduits 70, 70'), to prevent the formation of a plug in the melt passageway 148A, 148B adjacent the cooled spigot connection.

The mating faces 120, 120' of the melt conduits 70 and 70' are shown to preferably include a longitudinal cold clearance 116 of about 1 mm therebetween when the melt conduits are at that ambient temperature. This gap is selected (predetermined) to be taken up (or substantially closed) as the melt conduits expand in length as they are heated to the operating temperatures. Accordingly, there is substantially no gap, and maybe even some compression between the mating faces of the melt conduits 70 and 70'. Any such compression may act to provide a supplemental seal against leakage of melt. In this fashion, excessive compressive forces between the melt conduits 70, 70', due to thermal expansion, that may otherwise cause local yielding in the melt conduits 70, 70' is substantially avoided.

As discussed above, the melt also has a way of working its way through the gaps between the spigot coupling surfaces 76, 76', and is only substantially prevented by carefully controlling the temperature at the interface between these spigot coupling portions 76, 76' well below the melting point of the molding material. For the preferred embodiments, it is preferable that a cold clearance gap of about 0.1 mm between the spigot coupling portions 76, 76' be provided at ambient temperature. In use, the relative thermal expansion of the melt conduit coupler 80 and the melt conduits 70, 70' is such that this diametrical gap will be substantially taken up and preferably there is as an intimate contact between the accompanying portions at the operating temperature. Such intimate contact would provide a supplemental seal against further leakage of the melt, although a small residual gap is tolerable in view of the main mode of sealing (i.e. seal of solidified melt). Alternatively, there could be an exact fit, or even a small compressive preload between the spigot coupling portions 76, 76' at ambient temperature. This would ensure that there is supplemental sealing from the compression between the spigot coupling portions 76, 76' at the operating temperatures. Accordingly, the melt coupler 80 of the present invention provides a substantially leak-free seal between melt conduits 70, 70' that operates without requiring a compressive sealing force between the mating faces 120, 120' of the melt conduits 70, 70'.

In, an alternative embodiment (not shown), the melt conduit coupler may be integrated onto an end of one of the melt conduits.

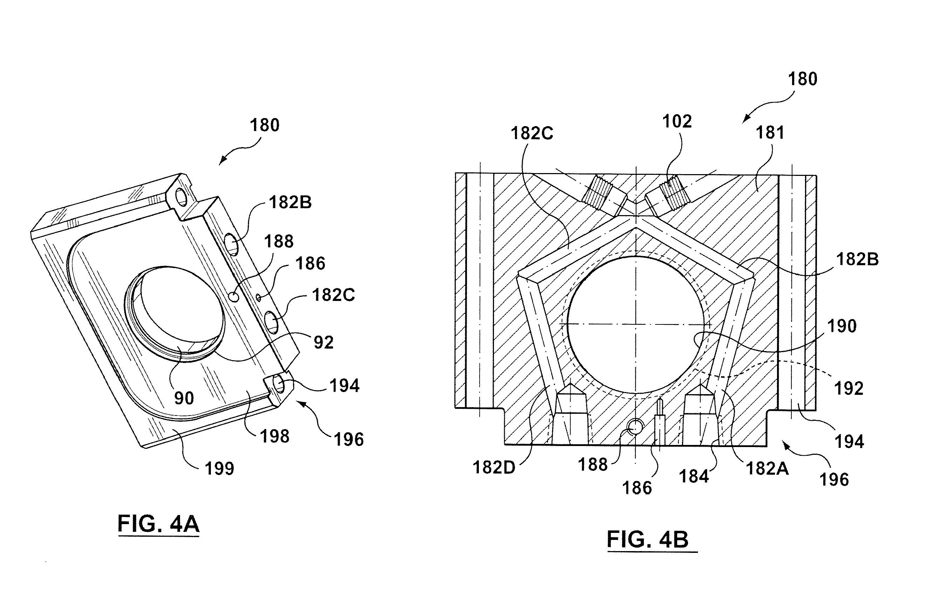

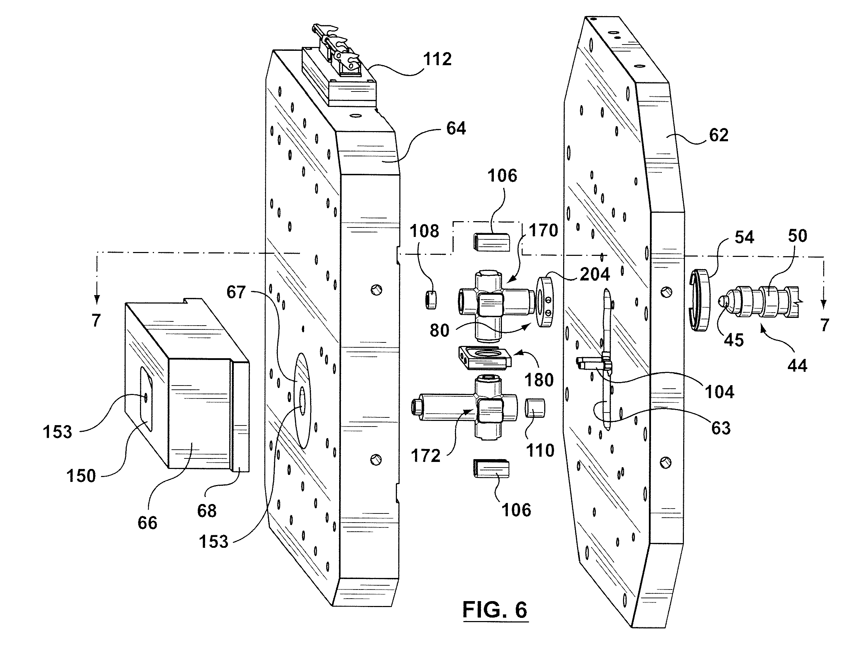

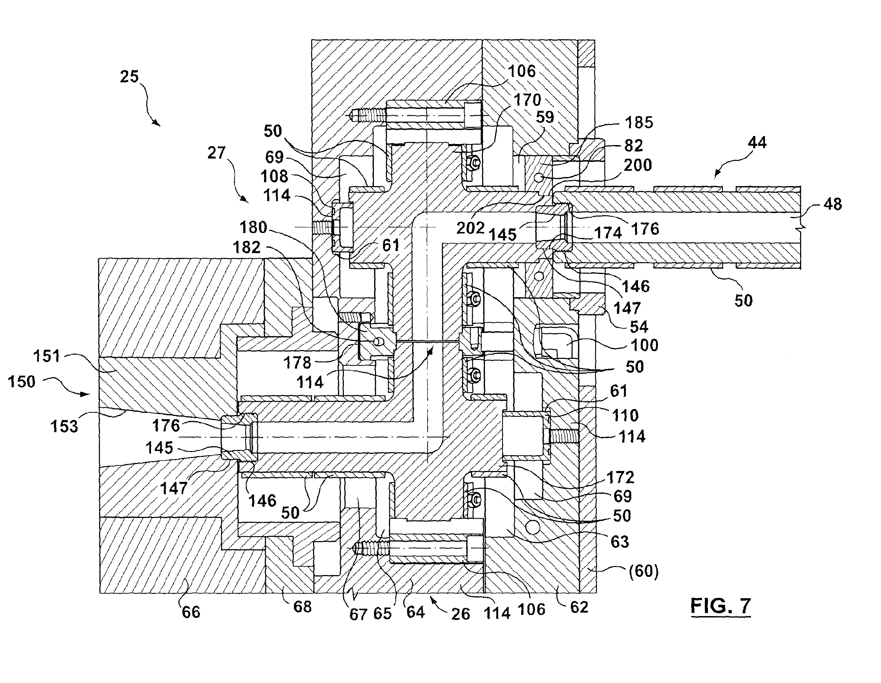

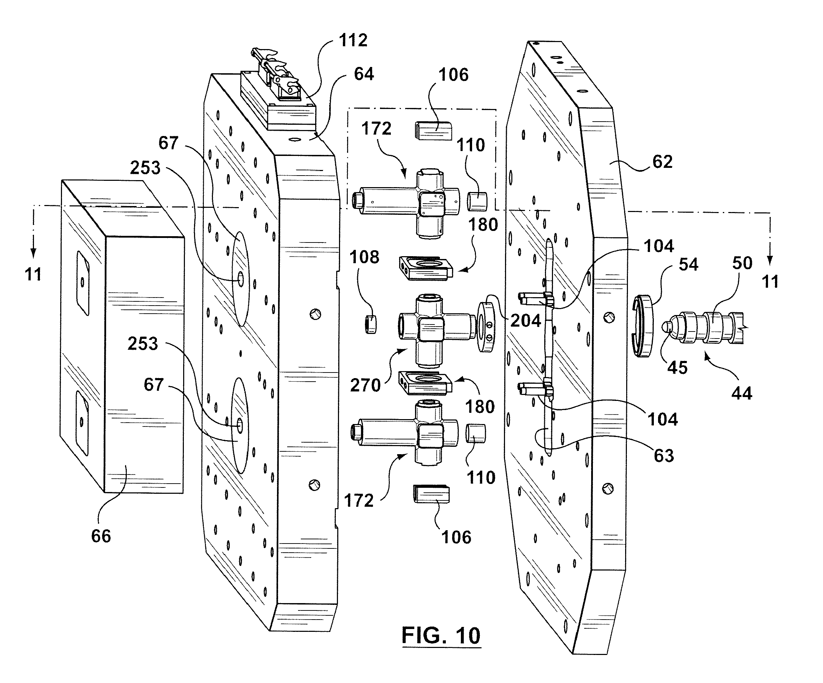

In, an alternative embodiment, the melt conduit coupler 180 is a parallelepiped, as shown with reference to FIGS. 4A and 4B. Accordingly, the outer surface of the melt conduit coupler 180 is rectangular, and a central cylindrical passageway configured therethrough is configured in a consistent manner as the prior embodiment with reference to FIGS. 3A and 3B. The rectangular body 181 of the melt conduit coupler 180 is more easily integrated, that is retained, within the plates of a hot runner system, as shown with reference to FIG. 6 and in FIG. 10. Preferably, the rectangular body 181 is configured to be retained in a complementary formed pocket provided in a hot runner plate (e.g. with reference to FIG. 7, the hot runner plates include a manifold plate 64 or a backing plate 62). As will be explained in detail hereinafter, the hot runner plates provide a housing for the melt conduits 70, 70' (or 'manifolds', as more commonly known), the melt conduit couplers 80, and all the other related components.

As previously mentioned, the specific features of the melt conduit coupler 180 are substantially similar to those discussed above with respect to melt conduit coupler 80 in FIGS. 3A and 3B. The spigot coupling portion 76 is provided on the inner circumferential surface of an annular portion 192, and also provided are shoulder portions configured on each side of the annular portion 192 that cooperate, in use, with complementary shoulder portions configured on the end portions of the melt conduits, or manifolds, to generally retain the melt conduit coupler 180. A coolant passageway 182 preferably comprises various drilled portions so there is a first coolant passage portion 182A, a second coolant passage portion 182B, a third coolant passage portion 182C, and a fourth coolant passage portion 182D. Preferably, the coolant passage portions are formed by drilling and the drill entrances may be plugged with plugs 102, as required. Coolant ports 184 and 184' are provided in communication with the coolant passageways 182 for receiving coupling fittings 100. As before, a thermocouple may be installed within a thermocouple installation 186, in proximity to the complementary spigot coupling portion 76 such that the temperature of the spigot connection can be closely monitored and the temperature and/or flow of the coolant can be adjusted accordingly. Preferably, the coolant is conditioned outside of the mold through the use of a Thermolator^{™} heating/cooling unit, as required. Again, a thermocouple retainer is provided adjacent to the thermocouple installation 186 to receive a fastener that fastens a clamp (not shown) for retaining the thermocouple within the thermocouple installation 186.

Also shown in FIG. 4A are a pair of cylindrical bores 194 that are configured on either side of the central opening in the melt conduit coupler 80, and that are substantially perpendicular to an axis thereof. In addition, a cut-out 196 is configured at the first end of each of the cylindrical bores 194, on an end of the rectangular body 181. The cylindrical bores 194 and the cut-out 196 provide a structure that cooperates with a shank and a head of a fastener, respectively, such as a socket head cap screw, such that the melt conduit coupler 180 can be retained within the pocket provided in a hot runner plate (e.g. the manifold plate 64 with reference to FIG. 7).

Also shown in FIG. 4A is a pocket surface 198 on each face 199 of the melt conduit coupler 180. The faces 199 are in contact with the surfaces of the pocket within the hot runner plate and control the amount of heat transfer therebetween. The larger the contact surface between the faces 199 of the melt conduit coupler 180 and the pocket, the more heat transfer between the two. Accordingly, the preferred design uses pocket surfaces 198 to minimize the contact surface between the faces 199 and the pocket in the hot runner plate so that the temperature at the spigot coupling portion 76, 76' may be more precisely controlled by influence of the coolant flow within the coolant passage 182.

### 4. Supplemental Expansion Bushing

With reference to FIG. 5, an alternative embodiment of the present invention is shown. Structures which are the same as those shown in FIG. 3B are designated by the same reference numbers. In FIG. 5, a expansion bushing 93 is provided to provide a supplemental seal between the melt conduits 70, 70'. Preferably, the expansion bushing is provided by an annular ring. An outside circumferential surface of the annular ring is configured to cooperate with a bushing seat 78 that is provided along an inner circumferential surface of a cylindrical bore that is formed through the end portions of the melt conduits 70, 70', concentric with the melt passageways 148A, and 148B. The inner circumferential surface of the expansion bushing connects the melt passageways 148A and 148B, and preferably has the same diameter. Preferably, the supplemental expansion bushing 93 is made from a metal which is different from that of the melt conduits whereby a compressive sealing force is developed between the outside surface of the expansion bushing 93 and the bushing seat 78 as a result of the relative thermal expansion of the expansion bushing 93 and the melt conduits 70, 70'. Preferably, the supplemental expansion bushing 93 is made from a material, like Stellite^{™} (a Cobalt-based alloy), which will grow slightly more per given temperature change than the melt conduits that may be made from DIN 1.2888. As the bushing seat 78 will also expand in length, a longitudinal cold clearance is preferably provided between the ends of the expansion bushing and the corresponding end of the seats to the extent that a portion of the gap remains even when the melt conduits 70, 70' are at their operating temperature such that the expansion bushing 93 does not act to separate the melt conduits 70, 70'.

### 5. Use in Offset Applications

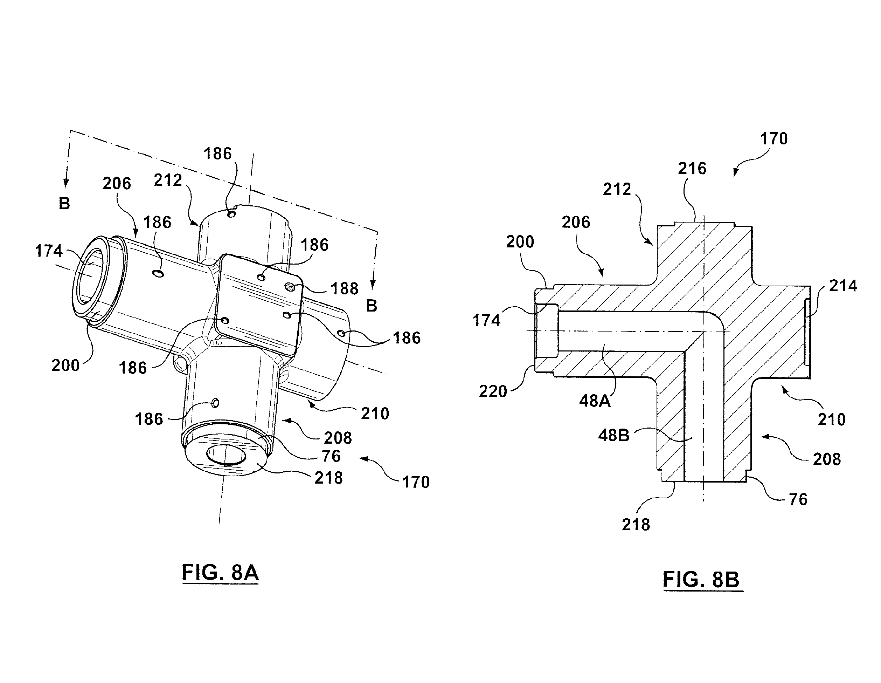

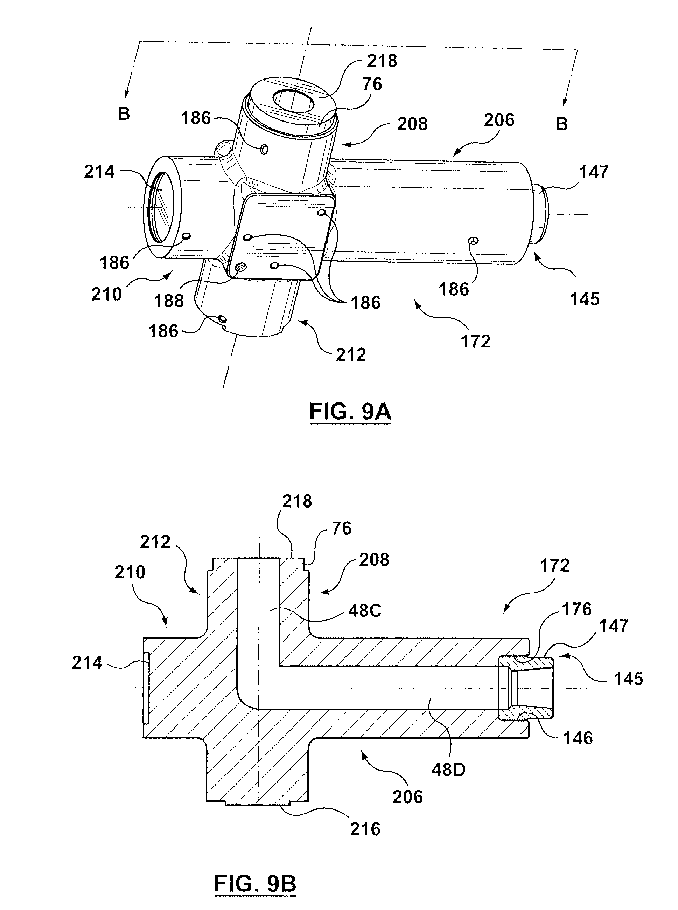

With reference to FIGS. 6 and 7, an injection mold hot half 25 is shown as including a single drop hot runner 26, with an offset drop, and a cavity plate assembly 27. The hot half 25 is preferably configured to accommodate a cavity molding insert (not shown). The hot runner 26 is useful in adapting molds that were intended for use in cold chamber die casting machine for use in an injection molding machine. In particular, many such molds include an offset injection portion (not shown) that is otherwise required to prevent the free-flow of melt into the mold cavity during an initial "slow shot" that purges air from the cold chamber. Thus, in order to center the cavity in die-casting machines, the injection point is situated offset from the center of the mold. Also, offset injection points may be necessary for parts that have to be filled from outside in. The hot runner includes a backing plate 62 and a manifold plate 64, with the melt conduit component and other auxiliary components housed therebetween. The hot runner 26 includes two melt conduits, namely a supply manifold 170 and a drop manifold 172. Both the supply and drop manifolds 170, 172 are configured to include right angle melt passageways therein, as shown in detail in FIGS. 8A , 8B, 9A, and 9B.

The supply and drop manifolds 170 and 172 are preferably interconnected with a melt conduit coupler 180. Preferably, the manifolds themselves are located in manifold pockets 65 provided in the manifold plate 64 and as shown with reference to FIG. 7. The manifolds 170, 172 are also configured to receive side insulator 106 and axial insulators 108 and 110 that substantially isolate the heated manifolds from the relatively cooler plates and to transfer axial loads thereto. Also shown in FIG. 6 are coolant conduits 104 that are configured to connect with the coolant ports 184, 184' on the melt conduit coupler 180. Also shown in the backing plate 62 is a services pocket 63, which provides a clearance for portions of the manifolds 170, 172, wiring for the thermocouples and heaters, the coolant conduits, and other auxiliary components.

Also shown in FIG. 6 is a cooling ring 185 which cools the inlet portion of the supply manifold 170. Cooling the inlet portion will assist in making a spigot connection between a spigot coupling portion 174 of a nozzle seat that is configured through the inlet portion of the supply manifold 172, and described in detail hereinafter, and a complementary spigot portion 45 provided on the machine nozzle 44. Such a configuration is generally known with reference to U.S. Patent No. 6,357,511. The cooling ring 185 comprises an annular coupling body with coolant passage(s) configured therein.

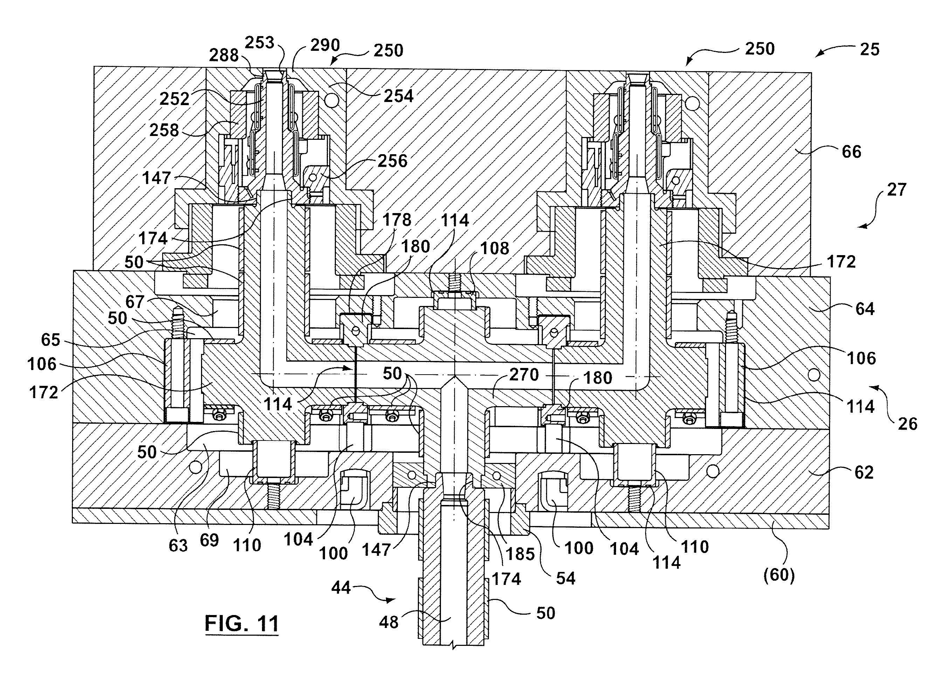

Also shown in FIG. 6 is a mold locating ring 54, that is configured to cooperate with a complementary locating ring (not shown) that is provided in the stationary platen 16 (FIG. 1) of the injection molding machine clamp 12 (FIG. 1) for aligning the nozzle seat of the supply manifold 170 with the machine nozzle 44 (FIG. 2). The cavity plate assembly 27, in further detail, comprises a cavity plate 66 and a spacer plate 68. A cavity molding insert (not shown) may be connected to a front face of the cavity plate 66. Also provided in the cavity plate 66 is a modified mold cold sprue 150 that comprises a sprue bushing 151 in which an outwardly tapering sprue passageway 153 is configured for the discharge of melt therethrough. The mold cold sprue 150 could be otherwise be a drop nozzle assembly 250, as will be explained later with reference to the embodiment of FIG. 10. The spacer plate 68 is simply an intermediate plate that spans a gap between the hot runner 26 and the cavity plate 66 that is otherwise dictated by the length of the discharge portion (elbow segment 308 as shown with reference to FIG. 9A and 9B). The length of the discharge portion was established to ensure its versatility for use with a drop nozzle assembly 250 (FIG. 11). Preferably, the manifold plate 64 is provided with a drop passage 67 through which extends the discharge portion of the drop manifold 172.

With reference to FIGS. 8A and 8B, the supply manifold 170 is shown in greater detail. The supply manifold 170 preferably has a cross-like shape and includes four structural portions; a first elbow portion 206, a second elbow portion 208, a third elbow portion 210, and a fourth elbow portion 212. Each of the elbow portions 206, 208, 210, and 212 is configured to serve a unique function. The first elbow portion 206 is essentially an inlet portion that is configured for interconnection with the machine nozzle 44 for connecting, in use, the machine nozzle melt passageway 48C with a melt passageway 148A of the first elbow portion 206. The first and second elbow portions 206, 208 are configured to be substantially perpendicular to one another. Accordingly, the second elbow portion 208 includes a melt passageway 148B extending therealong that is configured to cooperate with the melt passageway 148A of the first elbow portion 206 for substantially redirecting the melt traveling therethrough. The second elbow portion 208 is further configured for interconnection with an adjacent drop manifold 172 through the use of a melt conduit coupler 80. The third elbow portion 210, which is generally aligned with the first elbow portion 206, is configured for locating the supply manifold 170 within the plates 62, 64 along a first axis, and for transferring loads thereto. The fourth elbow portion 212, which is substantially perpendicular to the third elbow portion 210 and is generally aligned with the second elbow portion 208, is also configured for locating the supply manifold 170 within the plates 62, 64 along a second axis, and again for transferring loads thereto. Each of the elbow portions is preferably configured as a generally cylindrical body.

With reference to FIG. 8B, the first elbow portion 206 includes the melt passageway 148A that extends from a free end of the first elbow portion 206 along the length of the first elbow portion where it interconnects with the melt passageway 148B that is provided along the second elbow portion 208. Also provided at the free end of the first elbow portion 206 is a shallow cylindrical bore that provides a seat for receiving a spigot tip of the machine nozzle 44. Accordingly, an inner circumferential surface of the seat provides a spigot-mating portion 174. Preferably, a gap is configured between the shoulder 175 at the base of the seat and a front face of the spigot portion 45 when it is fully engaged within the seat. Accordingly, an annular face 218 provided at the free end of the first elbow portion 206 provides a spigot mating face 218 that is configured to cooperate with a complementary mating face provided on the machine nozzle 44 for limiting the longitudinal engagement of the spigot portion 45 of the machine nozzle 44 into the seat, and may otherwise provide a supplemental face seal to prevent the leakage of melt of molding material. Also shown, is a seat that is configured along a shallow diametrical relief provided in the outer circumferential surface of the first elbow portion 206, immediately adjacent the free end thereof, for receiving the cooling ring 185. As previously described, the cooling ring 185 functions to cool interface between the spigot coupling portion 174 of the seat for providing a spigot seal with the complementary spigot coupling surface on the spigot portion 45 of the machine nozzle 44.

The cooling ring seat includes a mating portion 200 and a locating shoulder 201. The mating portion 200 preferably cooperates with a complementary mating portion provided on the cooling ring 185, to conduct heat between the supply manifold and the cooling ring for cooling the spigot coupling portion 174. Preferably, the locating shoulder 201 retains the cooling ring 185 adjacent the free end of the first elbow portion 206.

The cooling ring 185 is shown in FIGS. 6 and 7. It preferably comprises an annular body with a coolant channel configured therein. The coolant channel is coupled to a source of coolant in the same manner as the melt conduit coupler 80, as described above. The cooling ring is configured to cool the free end of the supply manifold 170 to ensure that the interface between the spigot tip 45 of the machine nozzle 44 and the spigot coupling portion 174 in the supply manifold is kept at or below the melting temperature of the melt, so that a seal of molding hardened or semi-hardened melt material is provided therebetween.

The remaining outer circumferential surface of the first elbow portion 206 is configured to receive a heater 50. The heater maintains the temperature of the melt in the melt passageway 148A at the prescribed operating temperature. A controller (not shown) controls the heater 50 through feedback from one or more thermocouples, located in thermocouple installation cavities 186, that monitor the temperature of the melt passageway 148A. The feedback from the thermocouples could also be used to control the temperature in the cooling ring 185. A thermocouple clamp retainer may be used to retain one or more of the thermocouples in their respective thermocouple installation cavities 186.

The second elbow portion 208 is generally perpendicular to the first elbow portion, and also includes a melt passageway 148B that extends through a free end thereof and interconnects with the melt passageway 148A of the first elbow portion at substantially right angles thereto. An annular planar front face at the free end of the second elbow portion 208 provides a mating space 220 that is configured to cooperate with a complementary mating face on the drop manifold 172, as will be described hereinafter. Also shown is a shallow diametrical relief in the outer surface of the second elbow portion 208 that provides a seat for receiving the melt conduit coupler 180.

In further detail, the melt conduit coupler seat includes a spigot coupling portion 76 which is provided along an outer circumferential surface of the relief portion and a locating shoulder 79 which retains the melt conduit coupler adjacent the free end of the second elbow portion 208. As with the first elbow portion 206, the second elbow portion 208 is configured to receive a heater 50 for maintaining the temperature of the melt within the melt passageway 148B at the prescribed operating temperature. Also, there is preferably a thermocouple installation cavity provided along second elbow portion 208, for providing temperature feedback to the heater controller and the temperature controller for the melt conduit coupler 180.

The third elbow portion 210 is also preferably substantially perpendicular to the second elbow portion 208, and is generally coaxial with the first elbow portion 206. The third elbow portion 210 includes a shallow cylindrical bore that provides a seat 214 configured for receiving an axial insulator 108, as shown in FIG. 7. The axial insulator 108 functions to thermally insulate the supply manifold 172 from the cold manifold plate 64. The axial insulator 108 is also configured to assist in substantially locating the supply manifold 172 on a first axis, and is also configured to direct the longitudinally applied compressive force from the machine nozzle into the manifold plate 62. Accordingly, the axial insulators are preferably designed to withstand the separating forces due to melt pressures and the carriage force developed by the carriage cylinders. The third elbow portion 210 is preferably heated by a heater 50 located on the outer surface thereof to compensate for the heat lost to the cooled manifold plate 62.

The fourth elbow portion 212 is also generally perpendicular to the third elbow portion 210, and is substantially coaxial with the second elbow portion 208. The fourth elbow portion 212 includes an insulator stand 216 that is configured on the end face of a free end of the fourth elbow portion, and includes generally parallel sidewalls that are configured to cooperate with a complementary slot and a side insulator 106, as shown in FIG. 7. The side insulators 106 are also configured to cooperate with complementary seat provided in the manifold plate 64 to assist in positioning and thermally isolate the supply manifold 170. The fourth elbow portion 212 is preferably heated by a heater 50 located on the outer surface thereof to compensate for the heat lost to the cooled manifold plate 62.

As introduced hereinbefore, the location of the first elbow 206 (i.e. inlet portion) of the supply manifold 170 is preferably substantially fixed with respect to a first axis. With reference to FIG. 7, it can be seen that the location of the supply manifold 170 is substantially fixed, along the first axis, between the cooling ring 185 and the axial insulator 108 that are themselves located within seats provided in the backing plate 62 and in the manifold plates 64, respectively. Preferably, a cylindrical bore is provided through the backing plate 62 and provides a passageway 59 that provides clearance for the machine nozzle 44 and the first elbow portion 206 of supply manifold 170. In addition, an inner circumferential surface of the passageway 59 provides a cooling ring seat 204 that locates the cooling ring 185 and thereby locates the first elbow portion 206 of the supply manifold 170. Similarly, in the manifold plate 64 is a shallow cylindrical bore which provides an insulator pocket 69 and provides clearance for the third elbow portion 210 of the supply manifold 170. Preferably, there is another shallow cylindrical bore that is concentric with the insulator pocket 69 that provides a seat 114 for receiving the axial insulator 108. The axial insulator 108 is preferably fixed or retained into the insulator seat 114, and the insulator seat (in cooperation with the complementary insulator seat in the third elbow portion) substantially locates the third elbow portion 206 of the supply manifold.

In FIG. 7, the side insulator 106 is shown installed in an insulator seat 114 provided in the manifold plate 64 immediately adjacent a manifold pocket 65. The side insulator 106 is further configured to cooperate with the insulator stand 216 on the fourth elbow portion 212 to preferably thermally isolate the supply manifold 170 from the cooled manifold plate 64, to counteract, in use, any separation forces (e.g. reaction forces from melt flow within the melt passageway 148B) between the supply and drop manifold 170, 172, and to provide a limited degree of alignment for the supply manifold 170.

The drop manifold 172 is shown in FIGS. 9A and 9B. The drop manifold 172 is very similar in configuration to the supply manifold 170 and has a similar cross-like configuration with first, second, third, and fourth elbow portions 306, 308, 310, and 312, respectively. The first elbow portion 306 is configured to be coupled to the second elbow portion 208 of the supply manifold 170.

Accordingly, the first elbow portion 306 includes a melt passageway 148C that extends through the free end thereof and along the length of the first elbow portion 306, and is interconnected with a melt passageway 148D that extends along the second elbow portion 308. As with the second elbow portion 208 of the supply manifold, the first elbow portion 306 of the drop manifold includes a diametrically relieved portion adjacent the free end that provides a seat for the melt conduit coupler 180. As explained previously, the seat preferably comprises a spigot coupling portion 76 and a locating shoulder 79. An annular planer face at the free end of the first elbow portion 306 provides a mating face 220 that cooperates with the complementary mating face on the supply manifold 170. The remaining outer portion of the first elbow portion 306 is configured to receive a heater 50 and one or more thermocouple installations 186, as explained previously.

The second elbow portion 308, or discharge portion, is substantially perpendicular to the first elbow portion 306. The second elbow portion 308 includes the melt passageway 148D that extends through the free end of the second elbow portion 308 and interconnects with the melt passageway 148C of the first elbow portion 306. The free end of the second elbow portion 308 is preferably configured to include a seat for receiving a spigot tip insert 145. Of course, the spigot tip insert could otherwise be made integrally with the second elbow portion as shown with reference to FIG. 11 wherein an alternative embodiment of the drop manifolds 172 and 172' is shown. This spigot tip insert 145, as shown in FIG. 7, is configured to interconnect the drop manifold 172 with the sprue bushing 151 of the cold sprue 150. The seat provided through the free end of the second elbow portion 308 is provided by a shallow cylindrical bore, and an inner circumferential surface of the shallow bore provides a spigot coupling surface 176 that cooperates with an outer circumferential complementary spigot coupling portion 176' on the spigot tip insert 145. Also, an annular shoulder provided at the base of the shallow cylindrical bore provides a locating shoulder 177 for locating the spigot tip insert 145 within the seat. The outer circumferential surface of the spigot tip insert 145 also provides a spigot coupling portion 147 that is configured to cooperate with a complementary spigot coupling portion 147' provided in the sprue bushing 151. Through heat conduction to the cooled cavity plate assembly 66, a spigot seal is maintained between the complementary spigot interface portions 147, 147' and also between the spigot coupling portions 176, 176'. The remaining outer surface of the second elbow portion 308 is preferably configured for receiving heaters 50, and includes one or more thermocouple installation cavities 186 for temperature feedback control of the heaters 50, as explained previously.

The third elbow portion 310 is configured similarly to the fourth elbow portion 212 of the supply manifold 170 and accordingly includes an insulator stand 216 for receiving the side insulator 106, as shown in FIG. 7. The side insulator 106 is shown to be installed in a insulator seat 114 provided in the manifold plate 64.

The fourth elbow portion 312 is configured similarly to the third elbow portion 210 of the supply manifold 170, and accordingly includes a insulator seat 214. The insulator seat 214 is preferably configured to receive an end of an axial insulator 110 that can be seen in FIG. 7. The axial insulator 110 is retained within a insulator seat 114 provided in the backing plate 62. Also shown configured in the backing plate 62 is a shallow cylindrical bore that provides an insulator pocket 69 for providing clearance around the fourth elbow portion 312 of the drop manifold 172. The insulator seat 114 is preferably configured as a concentric shallow cylindrical bore formed at the base of the insulator pocket 69. As before, the axial insulator 110 functions to thermally insulate the drop manifold 172 from the backing plate 62, transfer axial loads to the manifold plate 62, and to assist in positioning of the drop manifold 172 about the inlet of the cold sprue 150. In particular, with reference to FIG. 7, it can be seen that the location of the drop manifold 172 is substantially fixed, along the first axis, between the sprue bushing 151 and the axial insulator 110 that are themselves located within seats provided in the cavity plate 66 and in the backing plates 62, respectively.

Also shown in FIG. 7, the melt conduit coupler 180 is located within a seat 178 provided in the manifold plate 64. As described previously, the melt conduit coupler 180 is preferably retained within the seat 178 through the use of fasteners that pass through the cylindrical bores 194 in the melt conduit coupler 180, and cooperate with complementary portions in the manifold plate 64.

As explained previously with reference to FIGS. 3A, 3B, and 5, the spigot coupling portion 76 provided on the inner circumferential surface of the melt conduit coupler cooperates with the complementary spigot coupling portions 76' of the free ends of the supply and drop manifolds 76 to provide a spigot seal therebetween. In the cold condition, there is preferably a cold clearance gap 116 between the mating faces 220 of the drop manifold 172 and the supply manifold 70. At operating temperatures, however, by virtue of the thermal growth of the manifolds, the mating faces of the manifolds will preferably meet to provide a supplemental face seal therebetween.

Also shown in FIG. 7 is an optional insulating plate 60 which thermally insulates the hot runner 26 from the relatively cool stationary platen 16 (FIG. 1) of the machine clamp 12.

With reference to FIGS. 10 and 11, another embodiment according to the present invention is shown. In particular, the hot half 25 is configured to include a multi-drop hot runner 26. The drops of a multi-drop hot runner 26 may be used for servicing a large molding cavity or a multi-cavity mold. While the present embodiment is configured to include two vertically oriented drops, other quantities and configurations of drops are possible. In the present embodiment the molding inserts are not shown, but would otherwise have been mounted to a front face of the cavity plate assembly 27, or recessed therein. The cavity plate assembly 27 has been configured to include two mold drop nozzle assemblies 250, each of which is configured to couple the molding cavities (not shown) with the drop manifolds 172 and 172'. The structure and operation of such a drop nozzle assembly 250 is generally described with reference to the description of a sprue apparatus in pending PCT Application PCT/CA03/00303. The important difference, is that the drop nozzle assembly 250 is presently configured to couple with the drop manifolds 172 instead of a machine nozzle 44.

As shown with reference to FIG. 11, the drop nozzle assembly 250 comprises a sprue bushing 252, which is essentially a tubular melt conduit, that is housed between a front housing 250 and a cooling insert 256.

The sprue bushing 252 is arranged within a front housing 254 such that a spigot ring portion 288, configured at the front of the sprue brushing 252, is received within a complementary spigot coupling portion provided in the front portion 290 of front housing 254. A rear portion of the sprue bushing 252 is received within a cooling insert 256 that is located within a rear portion of the front housing 254. The cooling insert 256 functions to cool an inlet portion of the sprue bushing 252 such that a spigot connection can be maintained between a spigot coupling portion 174, configured along an inner circumferential surface of a shallow cylindrical bore formed through the end of the sprue bushing 252, and the complementary spigot coupling portion disposed on the drop manifold 172.

Also shown is a plurality of heaters that are arranged along the length of the sprue bushing 252 to maintain the temperature of the melt within a melt passageway therein at a prescribed operating temperature.

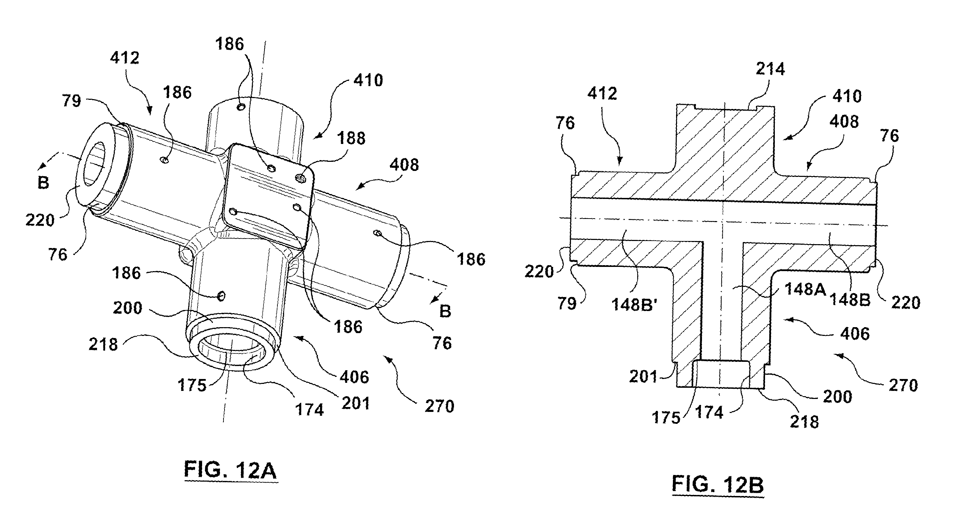

The configuration of the supply 270 and drop manifolds 172, 172' that are shown arranged between the manifold plate 64 and the manifold backing plate 62 with reference to FIG. 7 is substantially the same as that described with reference to the hot runner configuration (FIG. 7). As shown with reference to FIGS. 12A and 12B, a notable difference with respect to the supply manifold 270, relative to the that described previously and shown in FIGS. 8A and 8B, is that the fourth elbow portion 412 has been configured identically to the second elbow portion 408, including an additional melt passageway 148B', and hence is configured for interconnection with the additional drop manifold 172' adjacent thereto. To accommodate the extra drop manifold 172', as shown in FIG. 11, there is provided an additional melt conduit coupler 180, drop passage 67, insulator pocket 69, and insulator installation 114.

As described hereinbefore, the hot runner 26 could be reconfigured to include any quantity and/or configuration of drops. Accordingly, many variations on the number and configuration of the manifolds are possible. For example, an intermediate manifold (not shown) could be configured between the supply and drop manifolds.

Any type of controller or processor may be used to control the temperature of the melt and structure, as described above. For example, one or more general-purpose computers, Application Specific Integrated Circuits (ASICs), Digital Signal Processors (DSPs), gate arrays, analog circuits, dedicated digital and/or analog processors, hard-wired circuits, etc., may receive input from the thermocouples described herein. Instructions for controlling the one or more of such controllers or processors may be stored in any desirable computer-readable medium and/or data structure, such floppy diskettes, hard drives, CD-ROMs, RAMs, EEPROMs, magnetic media, optical media, magneto-optical media, etc.

### 6. Conclusion

Thus, what has been described is a method and apparatus for the coupling of molding machine structures to provide enhanced sealing while allowing for the thermal expansion of the components.

The individual components shown in outline or designated by blocks in the attached Drawings are all well-known in the injection molding arts, and their specific construction and operation are not critical to the operation or best mode for carrying out the invention.

While the present invention has been described with respect to what is presently considered to be the preferred embodiments, it is to be understood that the invention is not limited to the disclosed embodiments. To the contrary, the invention is intended to cover various modifications and equivalent arrangements included within the spirit and scope of the appended claims. The scope of the following claims is to be accorded the broadest interpretation so as to encompass all such modifications and equivalent structures and functions.

All U.S. and foreign patent documents discussed above are hereby incorporated by reference into the Detailed Description of the Preferred Embodiment.

## Claims

1. An injection molding system (10) usable for molding of a metal alloy above a solidus temperature of the metal alloy, the injection molding system (10) comprising:
a machine nozzle (44); and
a hot runner (26), including:
a supply manifold (170) being configured to receive the metal alloy from the machine nozzle (44), the supply manifold (170) having a first elbow-shaped portion;
a drop manifold (172) having a second elbow-shaped portion being coupled with the first elbow-shaped portion of the supply manifold (170);
a melt conduit coupler (80, 180) connecting the supply manifold (170) with the drop manifold (172), the melt conduit coupler (80, 180) including:
a cooling structure (82) being configured for cooling said melt conduit coupler (80, 180) so that a seal of at least partially solidified weepage of molding material forms at an interface between the supply manifold (170) and the drop manifold (172);
a backing plate (62) including an opening, the machine nozzle (44) extending through the opening; and
a manifold plate (64) abutting against the backing plate (62), the manifold plate (64) and the backing plate (62) supportively housing the supply manifold (170) and the drop manifold (172), the manifold plate (64) including a drop passage, and a discharge portion of the drop manifold (172) extending through the drop passage, the manifold plate (64) abutting the supply manifold (170) and the drop manifold (172),
wherein the drop manifold (172) is configured to transfer a load to the manifold plate (64) along a first direction extending inclined relative to a melt passageway of the drop manifold (172).

2. The injection molding system (10) of claim 1, wherein:
the drop manifold (172) is configured to transfer the load to the manifold plate (64) along a second direction extending substantially perpendicular relative to the melt passageway of the drop manifold (172).

3. A hot runner (26) of an injection molding system (10) having a machine nozzle (44), the injection molding system (10) being usable for molding of a metal alloy above a solidus temperature of the metal alloy, the hot runner (26) comprising:
a supply manifold (170) being configured to receive the metal alloy from the machine nozzle (44), the supply manifold (170) having a first elbow-shaped portion;
a drop manifold (172) having a second elbow-shaped portion being coupled with the first elbow-shaped portion of the supply manifold (170);
a melt conduit coupler (80, 180) connecting the supply manifold (170) with the drop manifold (172), the melt conduit coupler (80, 180) including:
a cooling structure (82) being configured for cooling said melt conduit coupler (80, 180) so that a seal of at least partially solidified weepage of molding material forms at an interface between the supply manifold (170) and the drop manifold (172);
a backing plate (62) including an opening, the machine nozzle (44) extending through the opening; and
a manifold plate (64) abutting against the backing plate (62), the manifold plate (64) and the backing plate (62) supportively housing the supply manifold (170) and the drop manifold (172), the manifold plate (64) including a drop passage, and a discharge portion of the drop manifold (172) extending through the drop passage, the manifold plate (64) abutting the supply manifold (170) and the drop manifold (172),
wherein the drop manifold (172) is configured to transfer a load to the manifold plate (64) along a first direction extending inclined relative to a melt passageway of the drop manifold (172).

4. The hot runner (26) of claim 3, wherein:
the drop manifold (172) is configured to transfer the load to the manifold plate (64) along a second direction extending substantially perpendicular relative to the melt passageway of the drop manifold (172).
